(19) Europäisches Patentamt
European Patent Office
Office européen des brevets

(11) **EP 4 538 427 A1**

(12) **EUROPEAN PATENT APPLICATION**
published in accordance with Art. 153(4) EPC

(43) Date of publication:
**16.04.2025 Bulletin 2025/16**

(21) Application number: **23819308.0**

(22) Date of filing: **06.06.2023**

(51) International Patent Classification (IPC):
**C25B 1/04** $^{(2021.01)}$          **C01B 3/02** $^{(2006.01)}$
**C02F 1/461** $^{(2023.01)}$

(52) Cooperative Patent Classification (CPC):
**C01B 3/02; C02F 1/461; C25B 1/04**

(86) International application number:
**PCT/ES2023/070372**

(87) International publication number:
**WO 2023/237797 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.06.2022 ES 202230493**

(71) Applicant: **Hydrogen & Innovation, S.L.
28004 Madrid (ES)**

(72) Inventor: **FUEYO GONZÁLEZ, Francisco José
28004 Madrid (ES)**

(74) Representative: **Cueto, Sénida
SP3 Patents S.L.
Los Madroños, 23
28891 Velilla de San Antonio (ES)**

(54) **METHOD FOR REMOVING NITROGEN COMPOUNDS**

(57)    The invention relates to a method for removing nitrogen compounds, characterised in that it comprises electrolysing a urea derivative of general formula I: $(R^1,R^2)N-C(=X)-N(R^3,R^4)$, wherein: X means NH, $NR^5$ or S, $R^1$, $R^2$, $R^3$, $R^4$ and $R^5$ can be the same or different, and have the meanings indicated in claim 1, or a polymer of the compound of formula I, in an aqueous medium, in at least one electrolytic cell comprising an anode that comprises a metal, wherein "metal" means one or more metals, one or more compounds of a metal or a mixture of metal compounds or combinations thereof, and comprising a metal cathode. The method further comprises obtaining nitrogen as a result of the oxidation of the nitrogen compounds at the anode and hydrogen as a result of the reduction of the water at the cathode, with the condition that if the anode is made of platinum, the cathode is not made of platinum.

EP 4 538 427 A1

**Description**

**FIELD OF THE INVENTION**

The present invention falls within the field of nitrogen compounds removal and their utilization to obtain clean energy sources, such as hydrogen.

**BACKGROUND**

Nitrogen compounds are present in excess in air, water, soil, and food, making them a public health hazard. For example, nitrates and nitrites are harmful to both humans and the environment, and there is a need to reduce their presence. Particularly, it is of great interest to use them to produce energy.

Moreover, hydrogen is known as the energy source of the future because it is more energetic than fossil fuels (gas, coal and oil) and unlimited. Furthermore, its transformation into energy generates only water vapour and is therefore totally clean. Currently, there is only one viable electrolysis method for obtaining hydrogen, which is the electrolysis of water, but its applications in the market are limited due to its low efficiency in the production of this element, leading to 96% of hydrogen being obtained from fossil fuels, which causes high pollution due to its extraction.

Despite being a field of research addressed by numerous researchers, there is no technology that can carry out the transformation of urea derivatives, such as thiourea and guanidine, by means of electrolysis for the production of hydrogen in a single step. This process, in addition to increasing hydrogen resources, will be able to denitrify water from rivers, streams and municipal wastewater effluent treatment plants.

Currently, the nitrate content of these waters prior to discharge is regulated, but available denitrification techniques are expensive and inefficient, so the development of technologies that allow the direct conversion of urea derivatives into valuable products before they are naturally hydrolysed to ammonia and toxic nitrogen derivatives can be a major technological advantage.

Urea derivatives appear in the literature, either as electrolytes in some processes or as material to manufacture electrodes, or as a source of sulfur. For example, the use of thiourea in the manufacture of electrodes has been described in Mixed MoS2/MoO3 Nanostructures for Hydrogen Evolution Reaction; Aftab, Umair; Ansari, Hamza Majeed; (...); Ibupoto, Zafar Hussain, 2021-04-01, Journal of Nanoscience and Nanotechnology 21 (4), pp. 2500-2510.

The scientific article Abdulkadir Levent, Ertugrul Keskin, Yavuz Yardim and Zühre Sentürk; Electrooxidation of thiourea and its square-wave voltammetric determination using pencil graphite electrode; Article in Reviews in Analytical Chemistry, April 2011; DOI: 10.1515/revac.2011.005 aims to detect the compound in the range of micromolar concentrations and discloses the electrochemical properties of thiourea in the pH range from 2.0 to 12.0 using cyclic voltammetry and square wave voltammetry.

The electrode system used according to this article comprised a PG (pencil lead graphite) electrode, an Ag/AgCl/3 M NaCl working electrode and a reference electrode (Model RE-1, BAS, USA), and platinum as counter electrode. Thiourea was oxidised on a pencil lead graphite electrode. And the applicability to wastewater treatment was tested. However, according to this article, thiourea electrolysis is not carried out.

On the other hand, document JPH02163392 (A), published in 1990, "*production of electrode*" refers to how to produce an electrode having a low hydrogen surge and superior durability by forming a sulphur-containing Ni coating layer on a base material, at a particular specified pH. The base material is, for example, an iron base material with a Ni bath of pH <=2 containing a Ni salt such as $NiCl_2$ and a soluble sulphur compound such as thiourea. An electrode having a low hydrogen surge of about 100-150mV is obtained, useful as an electrode for electrolysis on an industrial scale, such as water electrolysis.

WO2020213648 (A1) describes the use of thiourea with the purpose of achieving the electrolysis of water but refers to the obtaining of oxygen (ORRs). A catalyst according to this document contains Ni atoms, a condensate of thiourea and formaldehyde, and porous carbon.

The scientific article Effect of thiourea on the hydrogen yield in electrolysis, Yazici, B.; Arslan, G.; Erbil, M.; Zor, S.; International Journal of Hydrogen Energy (1998), 23(10), 867-872 refers to the effect that the use of thiourea has on electrolysis to obtain hydrogen. Thus, the effect of thiourea in $Na_2SO_4$ 1.0M + x mM TU (x = 0, 5, 15, 50) at different pH (from 2-8) was analyzed in an electrolysis using Pt as an electrode, both at the anode and in the cathode.

In relation to other urea derivatives, such as guanidine, document EP3054034A1, "*amine-containing electrolyte for electrochemical devices*", refers to how to increase the reliability of electrochemical devices operating in alkaline medium, avoiding anionic membranes and the degradation of stainless steel components. Guanidine is part of the aqueous solution of the electrolyte.

Other documents refer to the reaction of guanidine with water to produce at least hydrogen or ammonia, to drive a solid oxide fuel cell (SOFC), in which hydrogen is oxidized to produce electrical energy:
One of these documents is WO2008115662 A2, *carbon dioxide sequestering fuel synthesis system and use thereof,* but it does not refer to the electrolysis of guanidine itself.

Another of these documents is WO2012123380, also relating to the generation of energy from water and a composition comprising cyanoguanidine, but does not refer to the electrolysis of guanidine itself.

Finally, WO2017125610A1, refers to guanidine as a possible component of an electrolyte, but does not disclose the electrolysis of guanidine.

The electrodes, both anode and cathode, must fulfil several functions to be useful in the electrolysis of urea derivatives to obtain hydrogen:

- They must catalyse the decomposition reaction of the urea derivative.

- They must allow the generation of bubbles without blocking the pores of the active material, "active material" being understood as a material, generally used on the surface of the electrode, for example, a metal (it would be the "active metal") that catalyses redox reactions.

- They must allow the passage of the species of interest to the catalytic centres

- They must be electrically conductive so as not to incur excessive ohmic losses.

- They must be chemically stable in contact with the basic or neutral electrolyte (such as, for example, KOH).

- They must be as cheap, efficient and light as possible.

All of these premises make it complex to design and manufacture electrodes that comply with all of them without problems.

For this reason, the object of this invention is the elimination of nitrogen compounds, through their electrolysis with production of hydrogen and nitrogen.

From a urea derivative, such as thiourea or guanidine, hydrogen and nitrogen are obtained through the electrochemical treatment of waste effluents, directly or indirectly. That is, the waste effluent can be used directly, or artificially synthesized compounds, or effluents obtained and chemically treated prior to the hydrogen (electrolysis) and nitrogen production process.

With this invention we can generate hydrogen and nitrogen using the same energy source (urea derivatives) and at much more competitive prices than fossil fuels, which are restricted by the EU for the coming years. Likewise, we can apply this technology to combustion engines or fuel cells, avoiding the major problem of distribution and storage of different energy sources, which produce high piping and transportation costs, since raw materials such as thiourea and guanidine are materials that can be purchased anywhere without restrictions.

**DESCRIPTION OF THE INVENTION**

The present invention refers to a method for removing nitrogen compounds, that comprises performing an electrolysis of a urea derivative of general formula I:

$$(R^1, R^2)N\text{-}C(=X)\text{-}N(R^3,R^4)$$

where:

X means NH, $NR^5$ or S

$R^1$, $R^2$, $R^3$, $R^4$ and $R^5$ can be the same or different, and mean:

- hydrogen,

- alkyl group from 1 to 6 carbon atoms that can be linear or branched, unsubstituted or substituted with one or more heteroatoms, functional groups and/or saturated or unsaturated alkyl groups,

- unsaturated alkyl group with at least one double or triple bond, from 2 to 6 carbon atoms, which can be linear or branched, unsubstituted, or substituted with one or more heteroatoms, functional groups, and/or saturated or unsaturated alkyl groups,

- cycloalkyl, unsubstituted, or substituted with one or more heteroatoms, functional groups and/or saturated or unsaturated alkyl groups

- aryl unsubstituted or substituted with one or more heteroatoms, functional groups and/or saturated or unsaturated alkyl groups, or

is a polymer of the compound of formula I,

in an aqueous medium, in at least one electrolytic cell comprising:

- an anode comprising a metal, where "metal" means:

  - one or more metals

  - one or more compounds of a metal or mixture of metal compounds

  - or combinations of the above,

- and a metal cathode,

and obtaining nitrogen as a result of the oxidation of nitrogen compounds at the anode and hydrogen as a result of the reduction of water at the cathode,

provided that if one of the electrodes, for example, the anode, is made of platinum, the other electrode, cathode, is not made of platinum.

The substituents of the radicals $R^1$, $R^2$, $R^3$, $R^4$ and $R^5$ can be one or more heteroatoms, functional groups and/or saturated or unsaturated alkyl groups.

The heteroatoms can be oxygen, nitrogen, sulphur, halogens, phosphorus.

The substituent functional groups can be hydroxy, alkoxy, ether, ester, acid (carboxyl), amino, cyano, amido, nitro, carbonyl, carbamoyl.

The saturated or unsaturated alkyl groups that can be substituents can have a variable number of carbon atoms, preferably from 1 to 5.

The expression "aqueous medium" means that said medium comprises water alone, or alcohols or water mixed with alcohol, or water mixed with ketones or combinations of the three components. The alcohols can be alcohols of 1 to 6 carbon atoms, for example, methanol, ethane, propanol, isopropanol, butanol, isobutanol, pentanol, hexanol. Ketones can be, for example, acetone, butanone or pentanone. The aqueous medium can be acidic, basic or neutral.

According to particular embodiments, and when a nickel compound is used at the anode, during the electrolysis, in addition to the reduction of water at the cathode with hydrogen production, an oxidation of the nitrogen compound takes place in the anode, and at the same time, on the same electrode, the oxidation reaction of $Ni(OH)_2$ to NiOOH.

The urea derivative is preferably selected from thiourea and guanidine.

Electrolysis can be carried out under conditions such that:

- the concentration of urea derivative: can be any, for example, between 0,01 and 100 moles /l,

- voltage: can be any, for example, between 1 and 100 volts,

- current: can be any, for example, between 0.01 and 1 amperes.

The main function of the anode is to catalyse the oxidation of the nitrogen compound.

The anode can be any metal or comprise any metal. The term "metal" includes the options:

- a metal

- a compound of a metal

- or a mixture of metals

- a mixture of metal compounds,

or a combination of the above,
for example, nickel hydroxide, nickel oxyhydroxide, platinum, platinum oxide or mixture thereof.

According to particular embodiments, the anode is, or comprises, a mixture such as nickel and platinum

The "metal" component, as defined of the anode can be one or more active metals, or compounds thereof, that allow the electrochemical transformation of nitrogen compounds. The active metals can be nickel, palladium, cobalt, iron, copper, platinum, iridium, ruthenium, rhodium, titanium or any lanthanide such as europium, terbium and alloys or combinations thereof, for example, and in particular, nickel.

The anode, according to particular embodiments, is made of nickel hydroxide or nickel oxyhydroxide, or both. For simplicity, both cases will be represented as "nickel in oxide form" or as "nickel oxide/oxyhydroxide".

The term "nickel in oxide form" refers, if not otherwise specified, to either nickel hydroxide, nickel oxyhydroxide, or a mixture of both.

The anode, according to further particular embodiments, can be a material comprising nickel in oxide form, and platinum, more specifically, nickel hydroxide/platinum $[Ni(OH)_2/Pt]$ or nickel oxyhydroxide/platinum $[NiOOH/Pt]$ for electrolysis.

The symbol "/" in the present specification is equivalent to ",", meaning that the materials or substances mentioned are present and linked by this symbol. Furthermore, it means the order of addition or deposition of a material on the previously mentioned material. As an example: NiOOH/Pt/C allotrope means that the Pt has been deposited or mixed with NiOOH, and that the C allotrope has been deposited on, or mixed with, the material resulting from the previous mixture.

The percentages indicated in the specification refer to percentages by weight - unless specifically stated otherwise.

According to further particular embodiments, the anode comprises a metal formed by:

- nickel hydroxide $Ni(OH)_2$/platinum (Pt) in any proportion between Ni and Pt, or
- nickel oxyhydroxide (NiOOH/platinum (Pt)) in any proportion between Ni and Pt,

for example, with Ni to Pt ratios ranging from 75-95% Ni versus 5-25% Pt, more preferably between 80 -90% Ni vs. 10-20% Pt.

The anode can contain other components: in addition to the metal, which is always present, it can comprise semiconductor material and/or photovoltaic material.

The anode can comprise semiconductor materials, such as carbon allotropes, for example, graphite, graphene, nanotubes or fullerenes.

When the anode comprises a combination of metal/semiconductor material, the ratios of metal to semiconductor material can be any, preferably with ratio ranges for metal of 6-99% with respect to the semiconductor material and semiconductor material 1-94% with respect to metal.

The anode, according to further particular embodiments, is made of, or comprises (nickel oxide/oxyhydroxide)/semiconductor, such as allotrope of C. In this case the ratio of (nickel oxide/oxyhydroxide) in the anode can be any with respect to the weight of the semiconductor, and in particular, for example, from 2 to 95% (nickel oxide/oxyhydroxide) with respect to the weight of the semiconductor.

A particular alternative is an embodiment in which the anode comprises a metal comprising $Ni(OH)_2/Pt$ or NiOOH/Pt in any ratio, between the metal components ($Ni(OH)_2$ and Pt, or NiOOH and Pt), and can be deposited on, or mixed with, a semiconductor material, for example, any allotrope of carbon and more specifically, graphite or graphene, nanotubes or fullerenes.

According to particular embodiments, the anode comprises a mixture of metals and semiconductor material, for example $Ni(OH)_2/Pt/C$ allotrope or NiOOH/Pt/C allotrope, in any ratio between the metal and semiconductor component, preferably with ranges of metal between 6-99% with respect to the carbon allotrope and carbon allotrope 1-94% with respect to the metal.

The anode can further comprise photovoltaic material, a term to be understood as a substance capable of generating electrolysis by applying light of any wavelength to it. Examples of photovoltaic material are a metal, or a metal oxide, such as $TiO_2$, $WO_3$, ZnO, CdS, $Fe_2O_3$ and $SnO_2$.

According to further particular embodiments, the anode comprises a material formed by a mixture of metal and photovoltaic material in any ratio of metal to photovoltaic material of photovoltaic material with respect to the metal.

According to particular embodiments the anode is made of, or comprises, metal/photovoltaic material, for example (nickel oxide/oxyhydroxide)/photovoltaic material, such as (nickel oxide/oxyhydroxide)/$TiO_2$. In this case the ratio of the metal (such as nickel oxide/oxyhydroxide) in the anode can be any, and in particular, for example, from 5 to 98% relative to the weight of the photovoltaic material.

According to particular embodiments, the anode is made of, or comprises (nickel oxide/oxyhydroxide)/photovoltaic material/semiconductor, for example of (nickel oxide/oxyhydroxide)/$TiO_2$/C allotrope. In this case the ratio of nickel metal oxide/oxyhydroxide in the anode can be any, and in particular, for example, from 5 to 98% by weight of the semiconductor and photovoltaic material as a whole.

A further preferred alternative is an embodiment in which the anode comprises a $Ni(OH)_2$/Pt or NiOOH/Pt metal in any ratio between the metal components, deposited or mixed with a photovoltaic material such as $TiO_2$, $WO_3$, ZnO, CdS, $Fe_2O_3$ and $SnO_2$, specifically $TiO_2$, in a range of metal ratios between 1-94% with respect to the photovoltaic material. "Between metal components" means between $Ni(OH)_2$ and Pt or between NiOOH and Pt.

According to further particular embodiments, the anode comprises $Ni(OH)_2$/Pt/$TiO_2$ or NiOOH/Pt/$TiO_2$ deposited on, or mixed with, a semiconductor material, preferably, any allotrope of carbon, such as graphite, graphene, nanotubes or fullerenes.

In the case of including $TiO_2$, $Ni(OH)_2$ or NiOOH and Pt and $TiO_2$, they are mixed and agglomerated, with the granulometry of the agglomerate being around micrometers or smaller.

According to further particular embodiments, the anode comprises a material formed by a mixture of $Ni(OH)_2$/Pt/-$TiO_2$ or NiOOH/Pt/$TiO_2$ in any ratio between the mixture of $Ni(OH)_2$ or NiOOH and Pt, and $TiO_2$, for example. of 5-50% the mixture of $Ni(OH)_2$ or NiOOH and Pt, and $TiO_2$, with respect to the photovoltaic material and a ratio of 50-95% of $TiO_2$ with respect to the metal.

According to further particular embodiments, the anode comprises a mixture $Ni(OH)_2$/Pt/ $TiO_2$/carbon allotrope in all its forms or NiOOH/Pt/$TiO_2$/carbon allotrope in all its forms and in any ratio between **Ni and Pt**, preferably $Ni(OH)_2$ or NiOOH (5-97%), Pt (1-93%) and $TiO_2$ (1-93%), Carbon (1-93%). In the context of the invention "nickel" should be understood to be the elemental metal, nickel oxide, nickel oxyhydroxide or the mixture of the oxide and nickel oxyhydroxide.

A further preferred alternative is an embodiment in which the anode comprises

- $Ni(OH)_2$/Pt/photovoltaic material/semiconductor material in any ratio between Ni and Pt

- or NiOOH/Pt/ photovolatic material/semiconductor material in any ratio between Ni and Pt,

preferably in the following ratios of the metal components: $Ni(OH)_2$ or NiOOH of Ni, Pt in 7-98% of the metal with respect to the other components, photovoltaic material 1-93% and semiconductor material (1-93%), compared to the metal.

A further alternative is an embodiment in which the anode comprises $Ni(OH)_2$/Pt or NiOOH/Pt in any ratio between Ni and Pt, deposited or mixed on a photovoltaic material such as $TiO_2$, $WO_3$, ZnO, CdS, $Fe_2O_3$ and $SnO_2$, specifically $TiO_2$ and in turn deposited or mixed on a semiconductor material, more specifically graphite, graphene, nanotubes or fullerenes.

The anode of the present invention can have any shape, such as lamellar or cylindrical.

According to particular embodiments, the anode comprises a nickel compound deposited on porous titanium, preferably, nickel hydroxide deposited on porous titanium.

In order to obtain the anode, namely nickel hydroxide deposited on porous titanium current collectors, conventional methods of application with an airbrush gun and tape casting can be used.

According to particular embodiments, a first process for obtaining the anode comprises the deposition of nickel hydroxide on porous titanium current collectors by means of airbrushing.

According to particular embodiments, a second process for obtaining the anode comprises the deposition of nickel hydroxide on porous titanium current collectors by means of tape casting, this technique being the one that has made it possible to manufacture stable and reproducible electrodes.

The cathode can comprise any metal, or mixtures of metals. Preferred examples of metals are cobalt, copper, iridium, iron, nickel, platinum, palladium, ruthenium, rhodium or any lanthanide such as europium or terbium and mixtures and alloys thereof, for example and more preferably, platinum (Pt).

Any cathode according to the invention can be combined with any anode according to the invention.

A particular alternative is an embodiment in which the cathode comprises any metal or mixture of metals in any ratio thereof, supported or mixed on a semiconductor material. Examples of metals are cobalt, copper, iridium, iron, nickel, platinum, palladium, ruthenium, rhodium or any lanthanide such as europium or terbium and mixtures and alloys thereof, deposited or mixed on a semiconductor material, such as any allotrope of carbon, preferably graphite, graphene, nanotubes and fullerenes. According to particular embodiments, the metal is Pt supported or mixed on a semiconductor material, preferably, carbon allotrope, preferably graphite, graphene, nanotubes and fullerenes.

A further alternative is an embodiment in which the cathode comprises any metal or mixture of metals in any ratio thereof, deposited or mixed with a photovoltaic material. Preferred examples of metals are cobalt, copper, iridium, iron, nickel, platinum, palladium, ruthenium, rhodium or any lanthanide, such as europium or terbium, and mixtures and alloys thereof, supported on or mixed with a photovoltaic material, preferably, Pt deposited or mixed with a photovoltaic material,

such as $TiO_2$, $WO_3$, ZnO, CdS, $Fe_2O_3$ and $SnO_2$, preferably $TiO_2$.

A further alternative is an embodiment in which the cathode comprises any metal or mixture of metals in any ratio, such as cobalt, copper, iridium, iron, nickel, platinum, palladium, ruthenium, rhodium or any lanthanide, such as europium or terbium, and mixtures and alloys thereof, which can be deposited mixed on a semiconductor material, specifically graphite in all its forms or graphene in all its forms and in turn supported or mixed on a photovoltaic material such as $TiO_2$, $WO_3$, ZnO, CdS, $Fe_2O_3$ and $SnO_2$.

According to particular embodiments, the cathode is made of platinum.

The present invention further relates to an electrolytic cell or set of cells comprising one or more anodes such as the anode defined above.

Said cell, or set of cells, can also comprise one or more cathodes, electrolytes, separators and various catalysts, such as bases, for example KOH, chromophores such as those derived from ruthenium or iridium or organic compounds such as thiourea to improve the speed of the reaction with concentrations of these depending on the size of the cell and the volume and concentration of electrolyte.

The electrolytic cell can be made up of any material normally used in the technique, with the particularities that a specific embodiment can impose, for example, in the case of the cell whose electrodes use photovoltaic materials, mixtures of materials or a single material are used that allow the passage of light in any range of the electromagnetic spectrum, specifically quartz.

According to particular embodiments, the present invention also relates to an electrolytic cell comprising the anode as defined above for polymeric electrolyte fuel cells.

The shape of both the anode and the cathode can be any geometric or amorphous structure, specifically laminar, rectangular or cylindrical.

The absorption of the nitrogen compounds takes place at the anode. Therefore, the conductive component of the anode is one or more active metals that allow the electrochemical transformation of the nitrogen compounds.

As for the passive elements including as such conductive agents, binders and current collectors, those that are commercially available can be used.

When electrolysis is performed in basic medium, the basic medium can be generated with compounds such as metal hydroxides, carbonates, phosphates, hydrogen phosphates, where the metal can be any alkaline chemical element (for example, $K_2HPO_4$, $KH_2PO_4$), alkaline earth metals, transition metals, lanthanides, actinides, p-block metals, or non-metals.

According to particular embodiments, the basic medium is generated with KOH.

The electrolytes used can be derivatives of urea according to the indicated formula I, such as thiourea, thiourea polymers or mixtures of any of them, guanidine, guanidine polymers. Any of them or mixtures thereof can be used for any alternative of the invention.

Such electrolytes can be in a dissolved, liquid or solid state.

Such electrolytes can act in the production of hydrogen and nitrogen directly or as catalysts. For example, thiourea can be the electrolyte from which hydrogen and nitrogen are obtained, but it can also be mixed in small proportions with another urea derivative to facilitate the electrooxidation of the latter, acting in this case as a catalyst.

Any chromophore, and more specifically, ruthenium and iridium derivatives, can be used as reaction catalysts for the reaction.

Preferably, the electrolytic cell comprises a platinum cathode and an anode of a nickel compound, and more preferably, the nickel compound is deposited on porous titanium.

According to particular embodiments, the electrolytic cell for carrying out electrolysis of a urea derivative in a basic medium comprises:

- a nickel hydroxide cathode deposited on porous titanium,

- an anode connected to the Pt cathode, by means of a conductive agent,

- a solution of aqueous KOH as a base.

According to further particular embodiments, the cell contains electrodes of the following materials:

- Cathode: Platinum sheet.

- Anode: material comprising a mixture of $Ni(OH)_2$/Pt/photovoltaic material or NiOOH/Pt/photovoltaic material in any ratio between Ni and Pt.

According to further particular embodiments, the cell contains electrodes of the following materials:

- Cathode: Platinum sheet.

- Anode: material comprising a mixture of $Ni(OH)_2$/Pt/photovoltaic material/C allotrope in all its forms or NiOOH/Pt/-photovoltaic material/C allotrope in all its forms and in any ratio between Ni and Pt.

The cell can have electrodes separated into two compartments.

It can also be a cell with three or more electrodes.

According to a particular embodiment, during the application of current to the electrochemical cell, the urea derivative, preferably thiourea or guanidine, contained in a solution of potassium hydroxide (KOH) is oxidized at the anode, which consists of a porous nickel hydroxide electrode (positive), and at the same time, in the same electrode, the oxidation reaction of $Ni(OH)_2$ to NiOOH takes place, which serves as a catalyst for the decomposition of the urea derivative. The negative electrode, consisting of a platinum mesh, is where the alkaline reduction reaction of water occurs with the production of hydrogen.

The present invention demonstrates that guanidine and thiourea represent an alternative to urea because of their similar nitrogenous pollutant removal performance and better energy consumption values. Therefore, they represent an advantage over the known state of the art. Thanks to the present invention it has been possible to improve the cathodes in order to avoid interferences due to the presence of nitrogen compounds which can cause side reactions.

An advantage of using thiourea or guanidine as a nitrogen compound is that they comprise 4 or 5 hydrogen atoms respectively and when added to the water molecules containing 2 hydrogen atoms, the electrolysis process is more efficient, with lower use of energy and higher hydrogen generation than electrolysis of water (used in other fuel cells) containing only 2 hydrogen atoms.

Nitrogen compounds such as thiourea or guanidine are oxidized at the anode, while the reduction (e.g. alkaline) of water occurs at the cathode.

Reaction for thiourea in the particular case of alkaline electrolysis:

**(1) Anode:** $CS\ (NH_2)_2(aq) + 6OH^- \rightarrow N_2(g) + 5H_2O + CO\ (aq) + S\ (aq) + 6e^-$

**(2) Cathode:** $6H_2O + 6e^- \rightarrow 3\ H_2(g) + 6OH^-$

**(3) Overall reaction:** $CS(NH_2)_2(aq) + H_2O \rightarrow N_2(g) + 3H_2 + CO\ (aq) + S\ (aq)$

Global reaction for guanidine.

**Overall reaction:**
$$CNH(NH_2)_2(aq) + H_2O \rightarrow 1\tfrac{1}{2}N_2(g) + 3\tfrac{1}{2}H_2 + CO(aq)$$

**BRIEF DESCRIPTION OF THE FIGURES**

**Figure** 1 shows a schematic representation of an electrolyser to decompound nitrogen derivatives. Wherein N-BCs means "nitrogen derivatives"

**Figure 2** shows a potential - time curve and on the right a current versus potential curve.

**Figure 3.** $Ni(OH)_2$ electrodes formed by tape casting. Based on these results, electrodes were prepared by tape casting for electrochemical characterization tests.

**Figure 4.** $Ni(OH)_2$ electrodes formed by airbrush gun. Shows the appearance of the electrodes, after ink application and adhesion tests.

**Figure 5a.** Cyclic voltammetries of 5 M KOH solutions under different conditions and using Ni hydroxide as anode: a) without urea scanning speed 10 mV/s (curve 1) and 20 mV/s (curve 2), T = 25°C in both curves.

**Figure 5b.** Cyclic voltammetries of 5 M KOH solutions under different conditions and using Ni hydroxide as anode: b) with urea (0.33M); scanning speed 10 mV/s (curve 1) and 20 mV/s (curve 2), T= 25°C in both curves.

**Figure 6a.** Cyclovoltammetries (25° C) (10mV/s) with different electrolytes: a) 5 M KOH - blank b) urea.

**Figure 6b.** Cyclovoltammetries (25° C) (10mV/s) with different electrolytes: c) guanidine nitrate d) thiourea.

**Figure 6c.** superposition of the voltagrams of all solutes individually tested and shown in Figures 5a and 5b.

**Figure 7a to 7d**. Cyclovoltammetries (10mV/s) with different electrolytes tested at different temperatures (25°C, 40°C, 60°C and 80°C): a) urea; b) thiourea; c) guanidine.

**Figure 8.** Polarization test with 5M potassium hydroxide, and with 0.33M urea in 5M KOH.

**Figure 9.** Chronopotentiometry performed in a complete cell. 0.33 M solutions of each compound in 5 M KOH, at 10 mA and 25 °C.

Figure 10. Chronopotentiometry performed in a complete cell at 2 Ma and 25°C. The energy analysis was carried out when the system was stable, specifically hydrogen production and consumption measurements were made between 100 and 150 minutes of operation. (1: 5M KOH, 2: 0.33M urea in 5M KOH, 3: 0.33M thiourea in 5M KOH, and 4: 0.33M guanidine nitrate in 5M KOH).

## EXAMPLES

Tests of the most suitable anode materials for electrooxidation were carried out in an electrochemical cell with a three-electrode configuration, and a second part of hydrogen production tests in a complete cell with the selected electrodes and with different urea solutions - for comparison - and derivatives.

Characteristics of nickel electrode formulations (NiOOH) with different preparation modes were investigated, and their electrochemical behavior was investigated in a half-cell and under electrolysis operating conditions in a complete cell.

The preparation of the nickel hydroxide formulations was done mainly through 2 procedures; ink casting and ink application with an airbrush gun, selecting the latter method as the most appropriate.

In addition, thermal and electrical stability tests were carried out on the solutions with guanidine and thiourea in which the operating conditions of the electrolysis process were stimulated.

The formulations are solutions/suspensions with the active material (Ni hydroxide, for example) mixed with aqueous solvent, conductive agent and binder that give the mixture rheological conditions that allow its handling and subsequent dispersion on a metal support, so that allow its application on the anode.

The electrochemical performance of NiOOH anodes was studied, first in a three-electrode electrochemical cell and later in a complete cell emulating an electrolyser, with analysis of hydrogen production, elimination of pollutant and consumption.

## Anode Preparation

Examples of nickel hydroxide formulations were prepared following different methodologies to obtain electrodes with the material dispersed and stabilized homogeneously on a porous titanium metal support.

## Tape Casting

The preparation of the nickel hydroxide formulation by means of tape casting is based on the preparation of a suspension of the active material of interest, that is, nickel hydroxide in a medium composed of a solvent, for example (N-methyl-2-pyrrolidine (NMP), conductive agent, such as carbon black or acetylene black, and binder, such as polyvinylidene fluoride, PVDF that is cast onto a flat sliding support surface, such as porous titanium, by which a blade is passed that levels the suspension, giving rise to a film of controlled width and thickness, for example 2-3 cm wide and 50-100 $\mu$m thick. Subsequently, when the solvent evaporates, the particles consolidate to give rise to a mechanically adapted piece that can be used as an electrode. A COATMASTER Mod 510, Erichsen, Germany, was used to apply the tape casting process to the preparation of electrodes.

The samples (those electrodes with adequate consistency and mass loads around 10-15 mgNi(OH)$_2$/cm$^2$ that are optimal for the desired application (composition: 7:1:2 of nickel hydroxide, carbon black and PVDF )) of the nickel hydroxide formulation by means of tape casting were prepared in the form of ink in as follows. Once all the components were weighed, they are poured into a 250 mL beaker and the solvent N-Methyl-2-pyrrolidine (NMP) is gradually added while vigorously stirring the mixture using a glass rod. The final goal is to obtain a suitable pulp.

Different compositions were studied essentially modifying the content (8:1:1, 6:2:2, 7:2:1 and 7:1:2, of nickel hydroxide, carbon black and PVDF) of binder. The best performing inks were prepared by dispersing in a homogenizer-disperser a mixture containing 1.6 g of nickel hydroxide, 0.2 g of carbon black and 0.5 g of PVDF in 10 mL of N-Methyl-2-pyrrolidine (NMP), all reagents were supplied by Alfa Aesar. Subsequently, they were allowed to dry at 110°C under vacuum, so that the solvent evaporated and the pure material consisting of nickel hydroxide and carbon black remained.

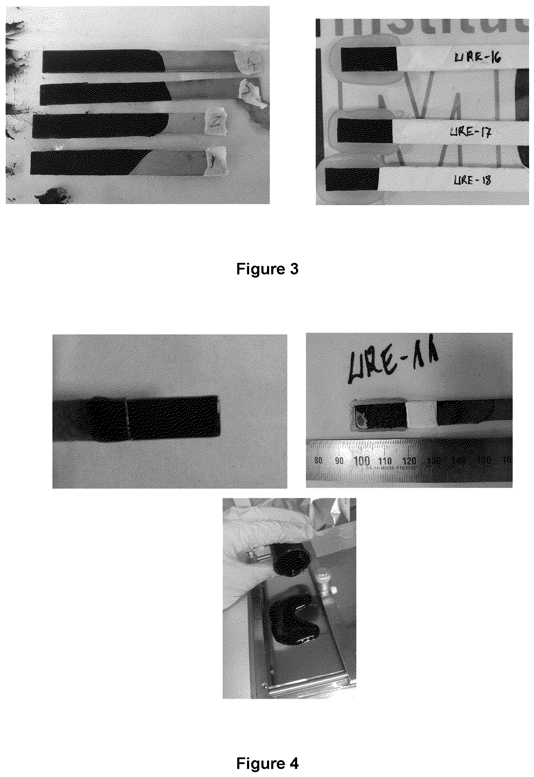

The electrodes obtained by this procedure showed consistency and mass charges around 10-15 mgNi(OH)$_2$/cm$^2$, which are suitable for the desired application. Figure 3 shows the appearance of the electrodes.

**Thermal stability tests of electrolytes**

In order to study the stability of solutions with nitrogen pollutants, thermal tests were designed in which the different samples were subjected; 0.33 M solution of thiourea in 5M potassium hydroxide, 0.33 M solution of guanidine nitrate in 5M potassium hydroxide, and 0.33 M solution of urea in 5M potassium hydroxide, were subjected to various temperatures in the presence and absence of prepared Ni(OH)$_2$ electrodes by tape casting. Glass vessels and thermostated baths were used. The samples were subjected to different temperatures 40, 60 and 80° C for periods of time (1, 5 and 10 hours), and visual inspections of the electrolyte were carried out.

The thermal stability characteristics of the mentioned nitrogen derivatives were evaluated with two approaches; stability of component solutions with a 0.33 M concentration in thermostated vessels, and stability with the same configuration adding two electrodes connected to each other and no current applied.

Heating was carried out in stages (40-60-80°C), once the temperature was reached it was maintained for a certain time, observing possible changes in the colour of the solution or the appearance of precipitates. Table 1 shows the test scheme and the results without electrodes and with electrodes immersed and connected to each other after 5 hours at 80°C.

Table 1. Stages of the thermal stability test and observations recorded for each solution.

| Solution | Tª (°C) | t(h) | Observations |
|---|---|---|---|
| 0.33 M thiourea in 5M KOH | 40 | 1 | *No change in colouring. No appearance of precipitates* |
| | 60 | 1 | *No change in colouring. No appearance of precipitates* |
| | | 5 | *No change in colouring. No appearance of precipitates* |
| | 80 | 1 | *Change in colouring. No precipitates* |
| | | 5 | *Colour change intensifies. No precipitates* |
| | | 10 | *Electrodes are introduced. Suspended solids appear* |
| 0.33 M guanidine nitrate in 5M KOH | 40 | 1 | *No colour change, or appearance of precipitates* |
| | 60 | 1 | |
| | | 5 | |
| | 80 | 1 | |
| | | 5 | |
| | | 10 | *Electrodes are introduced. Suspended particles appear* |
| 0.33 M urea in 5M KOH | 40 | 1 | *No colour change, or appearance of precipitates* |
| | 60 | 1 | |
| | | 5 | |
| | 80 | 1 | |
| | | 5 | |
| | | 10 | *Electrodes are introduced. No changes are observed* |

The results indicate that the temperature increase alone does not produce significant changes in the solution (except in the case of thiourea, where the colour intensifies at 80° C). However, when electrodes are introduced and short-circuited, the appearance of suspended solids is observed, this presence being more clearly observed in the thiourea solution. Also, in the guanidine solution, some suspended particles are observed.

**Characterization of electrolyte reactions in half-cell**

To study the electrochemical processes of the different anodes prepared, cyclic voltammetry experiments were carried out. The procedure consists of applying an overpotential to the study electrode, also called working electrode (WE), compared to a reference electrode (RE) from an initial voltage to a limit potential, which is known as potential window that must cover the areas where the reactions of interest occur, to subsequently perform the reverse scan while recording the intensity signal experienced at the working electrode in what would be equivalent to electrons released (oxidation reactions) and that have to be consumed at an auxiliary electrode called the counter electrode (CE) in which a reduction reaction takes place, all at a defined scan speed.

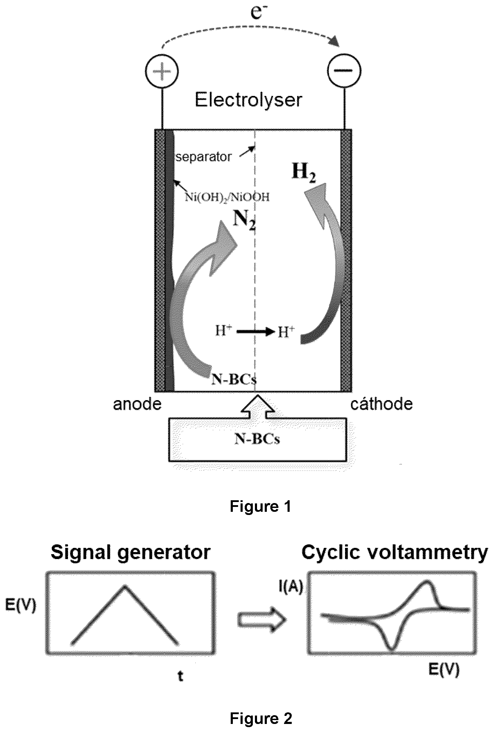

This procedure generates a triangular potential-time curve and another one corresponding to the current intensity measured in response to the application of the overpotential, as can be seen in the left and right images of Figure 2, respectively. Regarding the interpretation of the latter, applying a voltage difference to the working electrode promotes the potential to exceed the thermodynamic potential of the possible redox reactions that can take place at the solution-electrode interface depending on the species contained therein. Essentially, these reactions are promoted by lowering their activation energy. This is clearly observed in the current-voltage curve in Figure 2 called Cyclic Voltammetry, towards negative potentials (on the left), a region where the current intensity measured in response to the application of voltage modifies the energies of activation of the redox reactions that causes, when this section of the curve is reached, the current to increase in magnitude with negative values indicating that reduction reactions are taking place at the working electrode. This phenomenon intensifies as the potential shifts to even more negative values because the activation energy of the reaction becomes increasingly lower and therefore an increase in the speed of the reaction occurs, causing a sudden increase in the current. which shapes the beginning of a peak pointing towards negative currents.

However, at that point, as a consequence of the high speed, the oxidized species, which is the reagent that leads the reduction reaction, begins to become scarce in the vicinity of the solution-electrode interface. When the speed is moderate, there are species available on the surface of the electrode that gradually replace those that have reacted, but when the speed is high, it is not possible to access the reacting species at the same speed as they disappear, so that, once the maximum is reached, the current decreases suddenly, giving the peak shape shown in Figure 2.

Subsequently, when the potential scan approaches the same region, but in the voltage scan at positive values, the same behaviour is observed with the reactant in reduced form that proceeds to oxidise and a current signal appears, this time of positive values, in the form of a waveform. The combination of the oxidation peak and the reduction peak is known as redox reaction peaks and can be associated with the redox reactions of interest. Taking into account the shape of these peaks, the redox phenomena that occur in the system can be interpreted, specifically because they present a current density and a separation between the oxidation and reduction peaks whose magnitude is indicative of the electrochemical reversibility and the kinetics of the reactions of these species.

In the characterisation of anodes, commercial glass cells in a three-electrode configuration were used. The working electrode consisted of a porous titanium sheet (grade 2 >99% Titanium Metals UK Limited (TML)) with an effective area of between 2 and 5 $cm^2$, controlled by a Teflon coating and hot melt adhesive on the side and rear surface of the electrode. Hg/HgO (1M NaOH) was used as the reference electrode and a platinum mesh with an area considerably larger than that of the working electrode (12.5 $cm^2$) was used as the counter electrode. The distance between the working electrode and the reference electrode was about 2 cm, so some inaccuracy in the measurements was assumed due to the effect of Ohmic losses.

To carry out the experiments at different temperatures, thermostatic baths were used that allowed operation in a range between 25 and 80°C.

**Results**

Electrodes were prepared by tape casting for electrochemical characterization tests.

To study the electrochemical performance of the electrodes, cyclic voltammetry tests were carried out in three-electrode cells: The cells were filled with 75 mL of electrolyte solution in water (the concentrations are shown below), urea, thiourea and guanidine in each case, and the temperature was controlled by using a thermostatic bath. Experiments were carried out at different temperatures, obtaining the best results at room temperature.

The catalytic activity of the nickel hydroxide materials was then investigated by cyclic voltammetry between 0.0 and 0.8 $V_{Hg/Hgo}$ in 5 M KOH solutions in the presence and absence of urea, thiourea and guanidine nitrate at 0.33 M electrolyte concentration (thiourea, guanidine).

**Urea tests at 25°C**

A study of the electrochemical properties of urea solutions under room temperature conditions was carried out in order to validate the experimental system and to provide reference values for comparison.

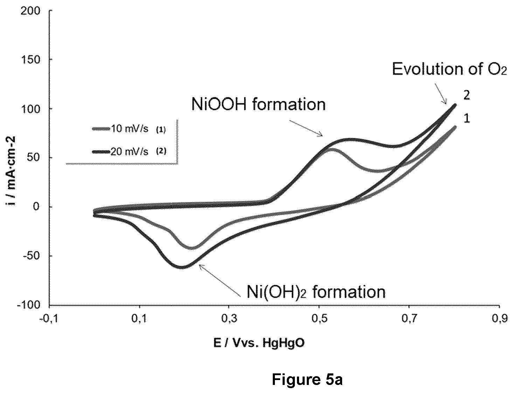

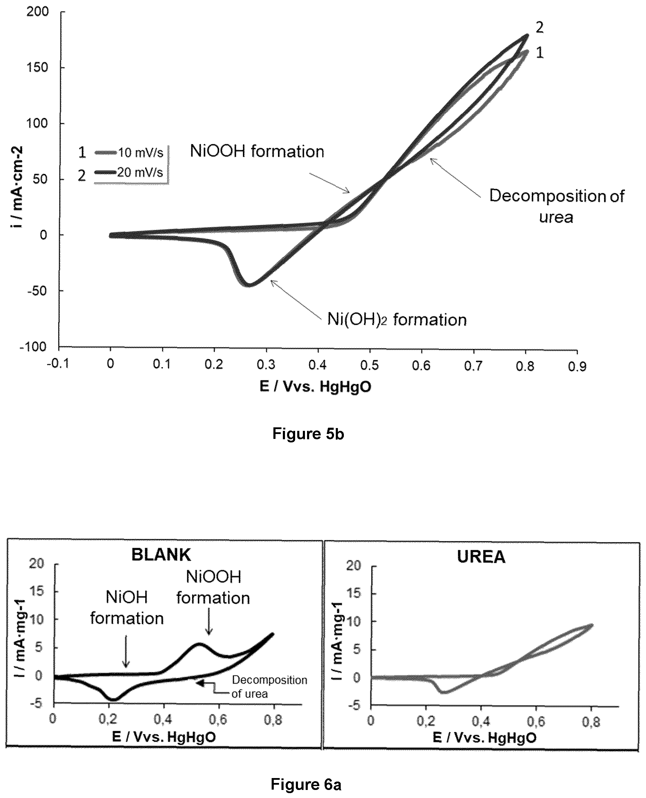

Figure 5 shows the cyclic voltammetries of solutions in the presence and absence of urea, in 5 M KOH base.

In the system without urea (Figure 5a), the peaks of both the oxidation of $Ni(OH)_2$ to $NiOOH$ and its reduction at potentials of 0.52 and 0.20 $V_{Hg/Hgo}$ can be clearly observed, being of higher current density and with greater separation between peaks when the scan speed is faster. These reactions are well known in alkaline medium and respond to the following equation:

$$Ni(OH)_{2(s)} + OH^- \leftrightarrow NiOOH_{(s)} + H_2O_{(l)} + e^- \qquad (1)$$

If the scan is extended to slightly more positive potential values around 0.70 $V_{Hg/Hgo}$, the increase in current associated with the evolution of oxygen can be observed due to the decomposition of water which, in an alkaline medium, progresses according to the following equation:

$$2OH^- \rightarrow 1/2\, O_{2(g)} + H_2O_{(l)} + 2e^- \qquad (2)$$

If the water molecule in the solution is being broken, the reactions associated with the generation of hydrogen must be occurring in the auxiliary electrode (CE) (Equation 3), and this was confirmed by the visualization of bubbling in the platinum mesh used as an auxiliary electrode during experiments. Furthermore, although not shown in the voltammogram, the voltage at the auxiliary electrode was recorded and observed to be stable at values close to -1.15 $V_{Hg/Hgo}$.

$$6H_2O_{(l)} + 6e^- \rightarrow 3H_{2(g)} + 6OH^- \qquad (3)$$

With these potential values, both oxygen evolution and hydrogen generation, it is possible to estimate that, in an electrolysis cell with platinum electrodes and nickel hydroxide on the negative and positive electrodes respectively, in a 5 M KOH solution in the absence of urea, cell tensions can be expected to be equivalent to the difference between the reactions at the positive electrode minus the negative electrode, that is, around 1.85 V. The overall reaction is described below, with the production of twice as much hydrogen as oxygen:
Overall Reaction:

$$2H_2O_{(l)} \rightarrow 2H_{2(g)} + O_{2(g)} \qquad (4)$$

When solutions with urea were used, it was not possible to observe the oxidation peak to NiOOH clearly. The shape of the voltammetries indicates a direct transition to urea decomposition without the formation of NiOOH. However, the oxidation of $Ni(OH)_2$ to NiOOH is attributed catalytic properties to decompose urea, which is the process observed if the scan is extended to slightly more positive potential values in the vicinity of 0.55 $V_{Hg/Hgo}$ with intensive bubbling at the electrode, which can be attributed to the formation of nitrogen while reducing water at the counter electrode that produces hydrogen, the same as in the process without urea.

Therefore, during the anodic scan, the urea contained in the solution is oxidized according to the reaction detailed below:

$$CO(NH_2)_{2(ac)} + 6OH^- \rightarrow N_{2(g)} + 5H_2O_{(l)} + CO_{2(g)} + 6e^- \qquad (5)$$

Then, in the cathodic scan, a loop can be observed that is usually associated with nucleation processes related to the electrodeposition of some species. Furthermore, the reduction of NiOOH to $Ni(OH)_2$ is observed.

As before, the voltage on the auxiliary electrode was recorded and the stable reduction of water was observed at values close to -1.20 $V_{Hg/Hgo}$, therefore, with urea decomposition potentials around 0.50 $V_{Hg/Hgo}$ it is possible to estimate the voltage of the following global reaction at 1.70 V:
Overall Reaction:

$$CO(NH_2)_{2(ac)} + H_2O_{(l)} \rightarrow N_{2(g)} + 3H_{2(g)} + CO_{2(g)} \qquad (6)$$

These voltage values are indicative since they essentially indicate the minimum potential that must be communicated for electrolysis to take place. In reality, the potential difference required for electrolysis can be higher, due to the occurrence of overvoltages, which are particularly important when gases are released or substances are deposited on the electrode.

**Urea derivatives Tests**

The overall reaction with urea is:
Overall Reaction:

$$CO(NH_2)_{2(ac)} + H_2O_{(l)} \rightarrow N_{2(g)} + 3H_{2(g)} + CO_{2(g)} \quad (6)$$

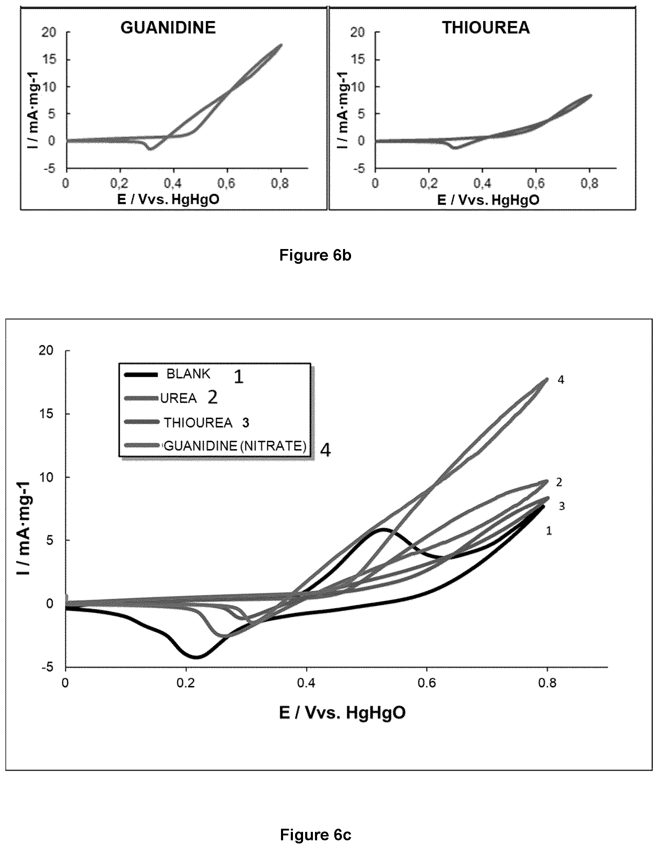

Once the experimental setup and test conditions were validated with urea solutions, the electrochemical behaviour of thiourea and guanidine was evaluated. The latter was prepared in the form of its nitrate salt because the pure salt was poorly soluble. Although different scanning speeds were evaluated, the collection of cyclic voltammetries of these solutions at 10 mV/s is shown in Figure 6. The voltammetries of solutions in the absence of nitrogenous compounds, based on 5 M KOH, are also included as blanks.

In all configurations with urea derivatives, the same behaviour is observed as in the samples with the test solution of urea, the NiOOH reduction peak, absence of the oxidation peak probably superimposed with the decomposition reactions of compounds beyond values of 0.55 $V_{Hg/HgO}$ area in which growth of the curve is observed, probably due to nitrogen formation following reaction (5) described above.

For thiourea and guanidine, differences are observed with urea, and their NiOOH reduction potentials are more positive than those observed with urea, around 0.30 $V_{Hg/HgO}$, compared to urea (0.25 $V_{Hg/HgO}$). In practical terms this implies that the polarization of the electrode for the reduction reactions of NiOOH to Ni(OH)$_2$ to take place requires that the potential be reached at less cathodic values, which generates more energy efficient processes.

**Tests of the reagents urea, thiourea, guanidine, at different temperatures**

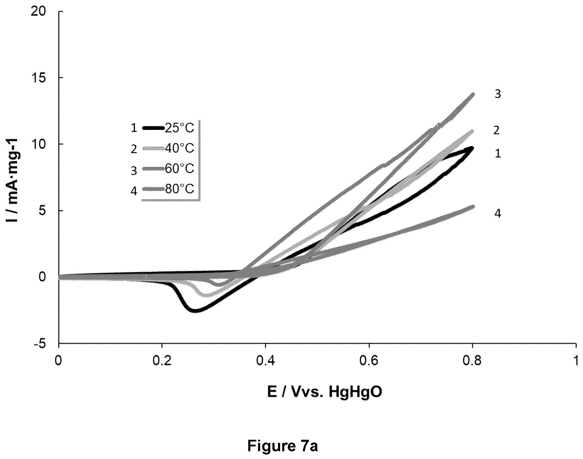

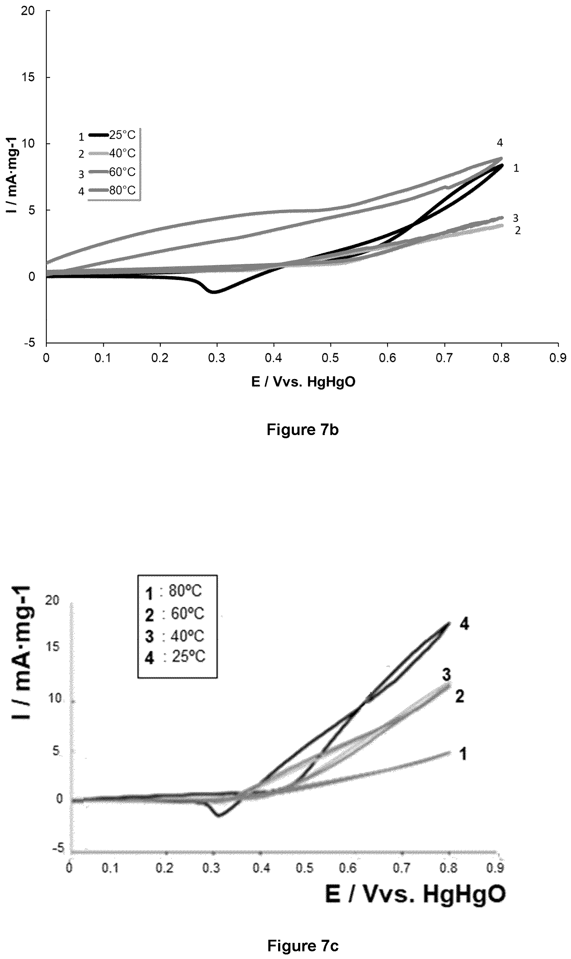

To study the electrolysis of urea solutions and its derivatives, cyclic voltammetries were carried out in a three-electrode cell (in the same configuration as before) with a scanning speed of 10 mV/s. In each test, new electrolytes and electrodes were used, so that the effect of possible degradation of the material and/or the medium does not affect the following tests. Four temperatures were tested: 25, 40, 60 and 80° C. Figure 7 shows the voltammetries with solutions of urea, thiourea and guanidine.

The results indicate that, in general terms, higher temperatures are more unfavourable for the evolution of electrochemical reactions than ambient temperature conditions. This is deduced from the low current density obtained by increasing the temperature, which is particularly remarkable at 80° C since the current density is reduced in all electrolytes.

With guanidine, no significant differences are observed between 40 and 60° C, with room temperature showing the highest intensity in the voltammogram. In the case of thiourea, instability is observed with increasing temperature.

**Characterisation of the electrolytes and the behaviour of the electrodes in a complete cell**

Experiments were performed in a complete cell emulating an electrolyser. The cell has electrodes located on each side, a platinum mesh in the cathode compartment for the production of hydrogen and electrodes prepared with nickel hydroxide in the anode compartment, the cell was filled with a urea solution, or thiourea or guanidine, through the feed tank (with the same concentrations as indicated in the voltammetry).

It was also compared to the electrolysis of water.

The procedure consisted of applying current to the system formed by the two electrodes with a potentiostat, recording the evolution of the voltage. The gases generated in each compartment were quantified in volume and accumulated to, at specific times, perform gas chromatography analysis with different detectors: thermal conductivity (TCD) and mass (MS).

In addition, the load applied to the system was recorded to correlate it with the volume of hydrogen generated and thus calculate the efficiency of the system for hydrogen production:

$$EFFICIENCY\ (\eta) = \frac{real\ mmols}{theoretical\ mmols} = \frac{P \times V / R \times T}{Q / N \times F}$$

where P is the pressure of the system, V is the volume of gas generated, R is the gas constant, T is the temperature of the system, Q is the applied electrical charge, N is the number of equivalents and F the Faraday constant.

With this procedure, hydrogen will be produced at the cathode and the corresponding gases at the anode depending on the solution, with KOH oxygen will be produced and with urea, thiourea or guanidine the main route should lead mainly to forming nitrogen, so the following equation is proposed to estimate the degradation of the pollutant.

$$ELIMINATION\ RATE = \frac{\left.\frac{(Prod_{gas} \times P)}{(R \times T)}\right/ meq_{N_2}}{mass_{act.mat.}(gr)}$$

where $Prod_{gas}$ is the anode gas flow rate (estimated as pure nitrogen in the case of nitrogen derivatives) in mL/h; meq is the number of moles produced by the decomposition of the nitrogen derivative; $rnass_{act.mat.}$ is the amount in grams of active material present in the electrode.

The parameter is given the following units:

$$\frac{mmols\ removed}{h \times g_{MA}}$$

For the application of this study, electrodes with the same composition as before (NiOH/NiOOH in the anode and platinum in the cathode) were used, this time with an effective area of 5 cm$^2$, controlled by a Teflon coating and hot melt adhesive on the edges and the back of the electrode. A platinum mesh with an area considerably larger than that of the working electrode (12.5 cm$^2$) was used as the cathode. The distance between electrodes was approximately 10 cm, so some imprecision in the measurements was assumed due to the effect of Ohmic losses.

To carry out the full cell study of the different urea, thiourea and guanidine solutions, the cell described in the section "characterisation of the electrolytes and the behaviour of the electrodes in full cell" with a capacity for 90 mL of solution was used. With it, constant current tests were first carried out at a current intensity of 2 mA and room temperature (20-25°C), recording both the cell voltage and the applied electrical charge, as well as the gas production, and subsequently tests were carried out in which the volume of hydrogen production was monitored to correlate it with the applied electrical charge.

At this current intensity, thiourea and guanidine give better results than urea.

**Polarisation tests**

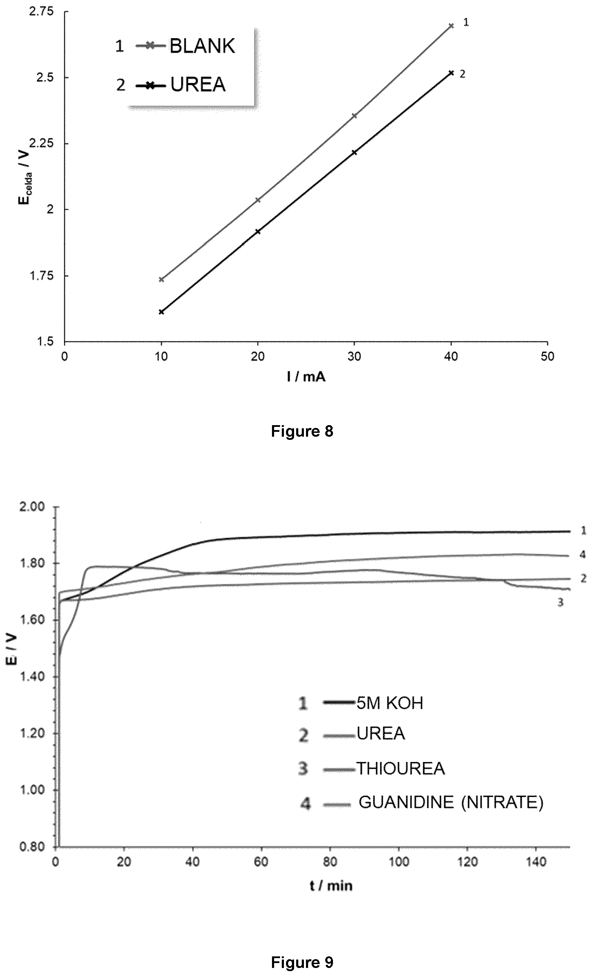

Initially, with the objective of determining the overvoltages of the reactions under reference conditions, polarisation tests were carried out on solutions of 5 M KOH in the presence and absence of urea solution, which is the nitrogenous base used as a reference, in which after applying a certain current for a short period of time, the voltage achieved is recorded. The results are shown in Figure 8 and allow the cell voltage to be linearly related to the applied current, and to decide the current intensities that can be applied to the complete cell arranged to emulate an electrolyser.

The potential values measured in these experiments are high compared to the standard electrolysis potential. This is because the half-reactions that take place in an electrolysis cell are not spontaneous and therefore, at least, a potential difference greater than the standard potential of the cell must be communicated to carry it out. However, when electrolysis of substances in aqueous solution is carried out, it is difficult to predict the operating voltage, since there can be competing reactions to the main ones on both electrodes. Whether one or the other happens will depend on various factors, such as the concentration of the dissolved substance, or the physical characteristics of the electrodes, but in general the potential difference required for electrolysis can be considerably higher than the standard potential, due to the occurrence of surges, especially important when gases are released or when substances are deposited on the electrode. As a consequence, it can be established that the cell potentials obtained in these experiments are suitable for solutions with thiourea and guanidine.

In view of these results, a current of 2 mA was selected for the full cell tests.

**Complete cell assays**

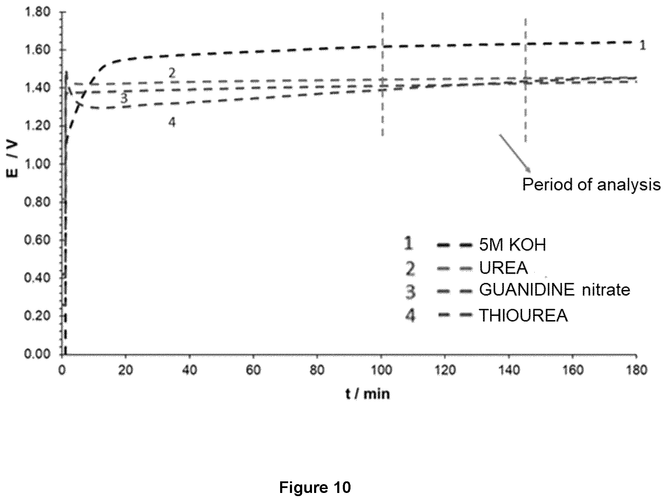

In the experiments, solutions of 90 mL of electrolyte were used with a current intensity of 2 mA. As anode, 5 cm$^2$ electrodes with mass loads of active material [Ni(OH)$_2$] of 3.5-4.5 mgMA/cm$^2$ were used. New electrodes were used in each trial. The duration of the test was determined by the production of the minimum volume of average anode gas in the cell, being at least one hour. Figure 10 shows the evolution of the voltage with the 3 compounds studied, all of them at a concentration of 0.33 M (0.33 M in 5M KOH each) and its comparison with 5M KOH, which would be equivalent to an alkaline electrolyser. The result is that the system with potassium hydroxide electrolyte leads to the highest voltage, while guanidine and thiourea, which would favour oxidation reactions at less positive potentials than the evolution of oxygen, operate at lower voltage. This is consistent with the results of the electrochemical study carried out at the three-electrode cell level.

Figure 10 shows the potential vs. time curves and Table 4 compiles the average voltage values during the experiment, the hydrogen production at the cathode, consumption and efficiency, for the 4 solutions studied. The test has been simplified, taking into account only the production of hydrogen, the applied load and the energy consumed.

Table 2. Calculations of efficiencies and productions for full cell tests at 2 mA conditions.

| Electrolyte | Medium Voltage (V) | PRODUCTION (mL/h) | | EFFICIENCIES (%) | *mmols removed* | CONSUMPTION kWh/Kg $H_2$ |
|---|---|---|---|---|---|---|
| | | Anode Gas (+) | Cathode Gas (-) | Cathode Gas (-) | $h \times g_{MA}$ | |
| 5M KOH | 1.63 | | 0.8 | 84% | | 52 |
| UREA | 1.45 | | 0.8 | 86% | | 47 |
| THIOUREA | 1.42 | | 0.9 | 98% | | 39 |
| GUANIDINE | 1.42 | | 0.8 | 90% | | 42 |

The energy analysis was carried out when the system was stable, specifically hydrogen production and consumption measurements were made between minutes 100 and 150 of operation.

For this reason, for the comparative analysis of consumption, 50 minutes were taken after that initial moment of stabilization for each experiment. The results indicate that, when the absence of nitrogen derivatives is compared with their presence, the production of hydrogen occurs at significantly lower voltages when the solution contains nitrogen derivatives, around 1.42-1.45 V, while with 5 M KOH values of 1.63 V are obtained. Under these conditions, producing approximately the same amount of hydrogen, differences in the energy consumption per kilogram of hydrogen produced are obtained that show that electrolysis using solutions with nitrogen derivatives and particularly based on guanidine and thiourea proceeds with a significant lower energy consumption.

**Claims**

1. A method for removing nitrogen compounds, **characterized in that** it comprises performing an electrolysis of a urea derivative of general formula I:

$$(R^1,R^2)N\text{-}C(=X)\text{-}N(R^3,R^4)$$

where:

X means NH, $NR^5$ or S
$R^1$, $R^2$, $R^3$, $R^4$ and $R^5$ can be the same or different, and mean:

- hydrogen,
- alkyl group from 1 to 6 carbon atoms that can be linear or branched, unsubstituted or substituted with one or more heteroatoms, functional groups and/or saturated or unsaturated alkyl groups,
- unsaturated alkyl group with at least one double or triple bond, from 2 to 6 carbon atoms, which can be linear or branched, unsubstituted, or substituted with one or more heteroatoms, functional groups, and/or saturated or unsaturated alkyl groups,
- cycloalkyl, unsubstituted, or substituted with one or more heteroatoms, functional groups and/or saturated or unsaturated alkyl groups,
- aryl unsubstituted or substituted with one or more heteroatoms, functional groups and/or saturated or unsaturated alkyl groups, or

is a polymer of the compound of formula I,
in an aqueous medium, in at least one electrolytic cell comprising:

- an anode comprising a metal, where "metal" means:

- one or more metals
- one or more compounds of a metal or mixture of metal compounds
- or combinations thereof,

- and a metal cathode,

and obtaining nitrogen as a result of the oxidation of nitrogen compounds at the anode and hydrogen as a result of the reduction of water at the cathode,

provided that if the anode is made of platinum, the cathode is not made of platinum.

2. The method according to claim 1, wherein the aqueous medium is a basic medium that is generated with potassium hydroxide.

3. The method according to claim 1, wherein the electrolytic cell comprises at least one platinum cathode.

4. The method according to anyone of claims 1 to 3, wherein the electrolytic cell comprises at least one anode made of nickel or a nickel compound, or the anode is made of nickel or a nickel compound.

5. The method according to claim 4, wherein the nickel compound is nickel hydroxide.

6. The method according to claim 5, wherein the nickel hydroxide is oxidized at the anode to nickel oxyhydroxide.

7. The method according to any one of the preceding claims, wherein the nickel compound is deposited on porous titanium.

8. The method according to claim 1, wherein the anode is made of a nickel compound that is deposited on porous titanium.

9. The method according to any one of the preceding claims, in which hydrogen is obtained as a result of the reduction of water at the cathode.

10. The method according to any one of the preceding claims, wherein the urea derivative is guanidine.

11. The method according to any one of the preceding claims, wherein the urea derivative is thiourea.

**Figure 1**

**Figure 2**

Figure 3

Figure 4

Figure 5a

Figure 5b

Figure 6a

Figure 6b

Figure 6c

Figure 7a

Figure 7b

Figure 7c

**Figure 8**

**Figure 9**

Figure 10

## INTERNATIONAL SEARCH REPORT

| International application No. |
| --- |
| PCT/ES2023/070372 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)
C25B, C01B, C02F

Documentation searched other than minimum documentation to the extent that such documents are included in the fields searched

Electronic data base consulted during the international search (name of data base and, where practicable, search terms used)

EPODOC, INVENES, WPI, NPL, CAPLUS, XPESP

**C. DOCUMENTS CONSIDERED TO BE RELEVANT**

| Category* | Citation of document, with indication, where appropriate, of the relevant passages | Relevant to claim No. |
| --- | --- | --- |
| A | YAZICI, B. et al. Effect of thiourea on the hydrogen yield in electrolysis. International Journal Of Hydrogen Energy, 30/09/1998, Vol. 23, N° 10, pages 867-872, <DOI: 10.1016/S0360-3199(97)00142-0> See abstract, sections 4 and 5. | 1-11 |
| A | BOGGS, B. K. et al. Urea electrolysis: Direct hydrogen production from urine. Chemical Communications, 01/07/2009, N° 32, pages 4859-4861, <DOI: 10.1039/b905974a > See figure 1, pages 4860-4861. | 1-11 |
| A | EP 3054034 A1 (GINKGO INVEST LTD) 10/08/2016, paragraphs 0015, 0028 and Example 1. | 1-11 |
| A | US 2008286165 A1 (GRAUPNER ROBERT, K ET AL.) 20/11/2008, paragraphs 0011 and 0083. | 1-11 |

☒ Further documents are listed in the continuation of Box C.       ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 28/08/2023 | **(31/08/2023)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | B. de Luis Fernández Telephone No. 913495451 |

Form PCT/ISA/210 (second sheet) (July 2022)

## INTERNATIONAL SEARCH REPORT

| | International application No. |
|---|---|
| | PCT/ES2023/070372 |

**C (continuation).** DOCUMENTS CONSIDERED TO BE RELEVANT

| Category * | Citation of documents, with indication, where appropriate, of the relevant passages | Relevant to claim No. |
|---|---|---|
| A | WO 2012123380 A2 (PUREGENERATION UK LTD ET AL.) 20/09/2012, pag. 3 lin 3-18. | 1-11 |
| A | WO 2008115662 A2 (PUREGENERATION UK LTD ET AL.) 25/09/2008, paragraph [0022] | 1-11 |
| A | WO 2017125610 A1 (AVANTIUM KNOWLEDGE CENTRE BV) 27/07/2017, paragraphs [0009], [0034]. | 1-11 |

Form PCT/ISA/210 (continuation of second sheet) (July 2022)

## INTERNATIONAL SEARCH REPORT

Information on patent family members

| International application No. |
| --- |
| PCT/ES2023/070372 |

| Patent document cited in the search report | Publication date | Patent family member(s) | Publication date |
| --- | --- | --- | --- |
| EP3054034 A1 | 10.08.2016 | NONE | |
| US2008286165 A1 | 20.11.2008 | RU2006142792 A | 20.06.2008 |
| | | RU2393116 C2 | 27.06.2010 |
| | | NZ551021 A | 27.11.2009 |
| | | ZA200609215 B | 30.04.2008 |
| | | WO2005108289 A2 | 17.11.2005 |
| | | WO2005108289 A3 | 05.01.2006 |
| | | JP2008500932 A | 17.01.2008 |
| | | EP1742871 A2 | 17.01.2007 |
| | | EP1742871 A4 | 30.11.2011 |
| | | CN1976874 A | 06.06.2007 |
| | | CA2565636 A1 | 17.11.2005 |
| | | BRPI0510234 A | 23.10.2007 |
| | | AU2005240661 A1 | 17.11.2005 |
| | | AU2005240661B B2 | 10.02.2011 |
| WO2012123380 A2 | 20.09.2012 | WO2012123378 A1 | 20.09.2012 |
| WO2008115662 A2 | 25.09.2008 | GB2452169 A | 25.02.2009 |
| WO2017125610 A1 | 27.07.2017 | NONE | |

Form PCT/ISA/210 (patent family annex) (July 2022)

## INTERNATIONAL SEARCH REPORT

| International application No. |
| --- |
| PCT/ES2023/070372 |

CLASSIFICATION OF SUBJECT MATTER

***C25B1/04*** (2021.01)
***C01B3/02*** (2006.01)
***C02F1/461*** (2023.01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02163392 A
- WO 2020213648 A1
- EP 3054034 A1
- WO 2008115662 A2
- WO 2012123380 A
- WO 2017125610 A1

**Non-patent literature cited in the description**

- **AFTAB, UMAIR** ; **ANSARI, HAMZA MAJEED** ; **LBUPOTO, ZAFAR HUSSAIN**. Mixed MoS2/MoO3 Nanostructures for Hydrogen Evolution Reaction. *Journal of Nanoscience and Nanotechnology*, 01 April 2021, vol. 21 (4), 2500-2510

- **ABDULKADIR LEVENT** ; **ERTUGRUL KESKIN** ; **YAVUZ YARDIM** ; **ZÜHRE SENTÜRK**. Electrooxidation of thiourea and its square-wave voltammetric determination using pencil graphite electrode. *Article in Reviews in Analytical Chemistry*, April 2011
- **YAZICI, B.** ; **ARSLAN, G.** ; **ERBIL, M.** ; **ZOR, S.** Effect of thiourea on the hydrogen yield in electrolysis. *International Journal of Hydrogen Energy*, 1998, vol. 23 (10), 867-872